# FASCICULE DE BREVET EUROPEEN

(11) **EP 0 530 102 B1**
(45) Date de publication et mention de la délivrance du brevet: **12.07.1995**
(21) Numéro de dépôt: 92402346.8
(22) Date de dépôt: 27.08.1992
(51) Int. Cl.: G01F 23/26

(54) **Conteneur comportant des moyens détecteurs de niveau de liquide dans le conteneur**
Behälter mit Flüssigkeitsstandmessvorrichtung
Container having integrated liquid level detection means

(30) Priorité: 30.08.1991 FR 9110782
(43) Date de publication de la demande: 03.03.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Klok, Cornélis, F-94370 Noiseau (FR); Delatte, Daniel, F-94100 Saint Maur (FR)
(74) Mandataire: Le Moenner, Gabriel

(56) Documents cités:
- FR-A- 1 162 975
- FR-A- 1 188 282
- GB-A- 792 484
- US-A- 3 167 695

## Description

La présente invention concerne un conteneur, du type comportant au moins une enveloppe définissant un volume intérieur, l'enveloppe comportant une partie principale pour contenir au moins un liquide, délimitée périphériquement par une portion de paroi principale, et une partie d'extrémité formant un passage d'accès au volume intérieur et de dimensions transversales inférieures à celles de la partie principale, des moyens d'obturation amovibles pour obturer le passage d'accès, et des moyens détecteurs de niveau de type capacitif fournissant un signal représentatif d'un niveau de liquide dans la partie principale de l'enveloppe.

Un conteneur de ce type est décrit dans le document FR-A-1.162.975.

La présente invention concerne tout type de conteneur de liquide à coefficient de conductivité électrique différent de celui du ciel gazeux surplombant le liquide dans l'enveloppe du conteneur et nécessitant un accès au volume intérieur du conteneur, et plus particulièrement les conteneurs cryogéniques, notamment, quoique non exclusivement, pour le stockage de produits biologiques dans un liquide cryogénique tel que l'azote liquide.

Il a déjà été proposé de disposer des moyens, mécaniques ou électriques -comme dans le document sus-mentionné-, détecteurs de niveau sous la forme de canne s'étendant dans l'enveloppe au travers du passage d'accès. Cette technique présente toutefois l'inconvénient de devoir retirer les moyens détecteurs pour libérer l'accès au volume intérieur, ne serait-ce que pour son remplissage. Cette amovibilité des moyens détecteurs pose des problèmes de mise en place et de calibration et, en particulier, dans les conteneurs cryogéniques, des problèmes de piégeage d'humidité provoquant fréquemment des mises hors service des moyens détecteurs lors de leur réintroduction dans l'enceinte froide. Dans le domaine des conteneurs cryogéniques pour produits biologiques, on a par ailleurs proposé des moyens détecteurs à ultrasons portés par les moyens d'obturation, selon une approche onéreuse et cependant peu fiable.

Les documents GB-A-792.484 et FR-1.188.282 décrivent tous deux des conteneurs de type fermé avec des plaques électrodes traversant l'espace interne ou enclosant ce dernier, respectivement.

La présente invention a pour objet de proposer un conteneur équipé de moyens détecteurs de niveau suivant un agencement simple et fiable, de faibles coûts de fabrication et de montage, laissant en permanence le libre accès au volume intérieur sans interférer avec les produits qui doivent y être disposés.

Pour ce faire, selon une caractéristique de l'invention, la portion de paroi principale est sensiblement cylindrique, et les moyens détecteurs comprennent au moins une électrode montée au voisinage de la portion de paroi principale, l'électrode étant constituée d'une lame allongée s'étendant parallèlement à une génératrice de la portion de paroi principale et présentant, en section transversale, une forme en arc de cercle sensiblement concentrique à la portion de paroi principale adjacente.

Selon une caractéristique plus particulière de l'invention, l'enveloppe et métallique et constitue une des électrodes des moyens détecteurs.

Avec un tel agencement, les moyens détecteurs sont mis en place à demeure en usine et se situent dans une zone "neutre" du volume intérieur de l'enveloppe, décalée du passage ou col d'accès, en n'occupant dans celle-ci qu'un volume minime, n'interférant nullement avec les produits à disposer dans l'enveloppe et sans obstruer ni même encombrer le passage d'accès.

D'autres caractéristiques et avantages de la présente invention ressortiront de la description suivante d'un mode de réalisation faite en relation avec les dessins annexés, sur lesquels :
- la figure 1 est une vue schématique, partiellement en coupe longitudinale, d'un conteneur cryogénique selon l'invention ; et
- la figure 2 est une vue en coupe transversale partielle suivant le plan de coupe II-II de la figure 1.

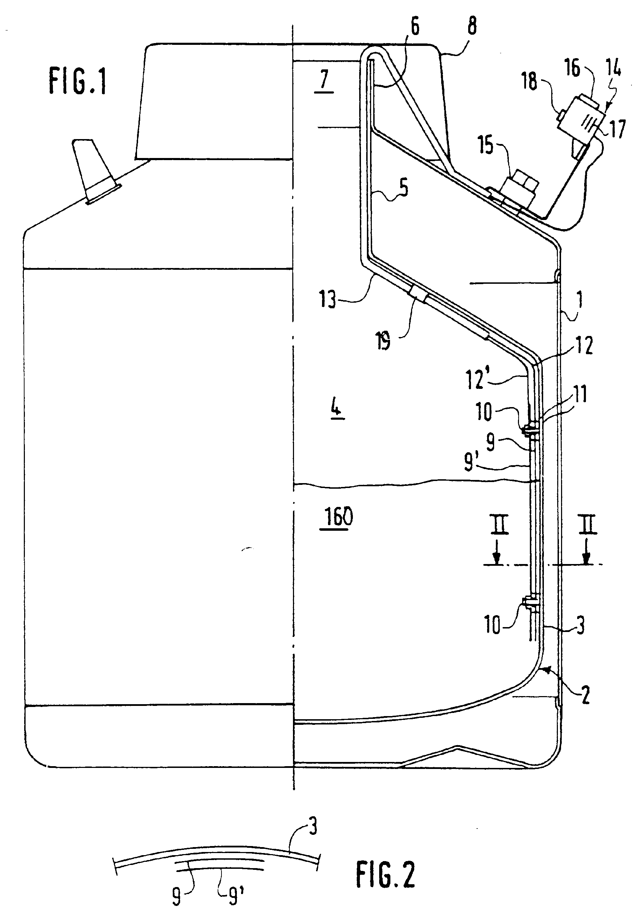

On a représenté sur la figure 1 un conteneur cryogénique transportable comportant classiquement une enveloppe extérieure 1 et une enveloppe intérieure 2 de révolution, l'espace entre les deux enveloppes 1 et 2 étant placé sous vide et/ou rempli d'un isolant thermique. L'enveloppe 2, typiquement en métal tel que l'acier ou l'aluminium, comporte une partie principale inférieure délimitée périphériquement par une portion de paroi principale cylindrique 3 et définissant un volume de stockage intérieur 4, l'enveloppe intérieure 2 comportant, à son extrémité supérieure, une partie de col de diamètre réduit 5 à laquelle se raccorde une partie de col d'extrémité 6 de l'enveloppe extérieure 1 et définissant un passage 7 d'accès au volume intérieur 4 obturable par un capuchon d'obturation amovible 8.

Conformément à la présente invention, le long d'une génératrice de la portion de paroi principale 3 de l'enveloppe intérieure 2 sont disposées au moins une, typiquement deux électrodes parallèles allongées, 9, 9′, par exemple en aluminium ou en cuivre, maintenues espacées l'une de l'autre et de la paroi 3, parallèlement à une génératrice, par des goujons 10 soudés sur la paroi 3 et des rondelles entretoises 11 réalisées en matériau non conducteur, par exemple en matériau plastique. Les électrodes sont reliées à des fils conducteurs 12, 12′ courant le long de la paroi de l'enveloppe 3 dans un tube passe-fils 13 maintenu plaqué sur la paroi par une bride 19 et s'étendant le long de la paroi du col 5 puis, se rabattant sur la paroi extérieure de l'enveloppe extérieure 1, les conducteurs 12 et 12′ se prolongeant hors du capuchon 8, jusqu'à un boîtier de lecture 14 fixé sur l'enveloppe extérieure 1, par exemple grâce au raccord 15 de mise sous vide de l'espace entre les deux enveloppes 1 et 2 et formant la connexion électrique entre les circuits électroniques du boîtier 14 et de l'enveloppe intérieure 2.

Selon un aspect de l'invention, le boîtier de lecture 14, alimenté par une pile électrique, comporte des moyens électroniques de traitement numérique du signal fourni par les électrodes 12 et 12′ en fonction du niveau de liquide 160 contenu dans l'enveloppe interne 3, ce niveau étant affiché sur un indicateur de niveau 16. Le boîtier 14 comporte en outre un indicateur sonore 17 émettant un signal sonore lorsque le niveau de liquide dans l'enveloppe 2 atteint un seuil minimal déterminé et avantageusement un connecteur d'interfaçage 17 connectable à un boîtier d'un système de remplissage du conteneur, opéré via le col 7, de façon à commander le dispositif de remplissage en fonction du niveau lu en temps réel par les électrodes 9, 9′ via le boîtier 14.

Pour augmenter la sensibilité des moyens détecteurs, comme représenté sur la figure 2, les électrodes 9 et 9′ présentent avantageusement, en section transversale, la forme d'arcs de cercle concentriques à la paroi 3 de l'enveloppe 2.

Dans l'application aux conteneurs cryogéniques pour produits biologiques, également appliqués "cryoconservateurs", les électrodes 9 et 9′ seront disposées dans une des zones mortes entre deux paniers de rangement adjacents reçus dans la partie principale de l'enveloppe 2.

Dans les applications aux réservoirs cryogéniques stationnaires, les fils conducteurs 12 et 12′ pourront traverser de façon étanche les enveloppes 2 et 1, par exemple dans un tube passe-fil ménagé dans la partie inférieure du réservoir, le boîtier de lecture 14 étant avantageusement disposé également à la base du réservoir et étant raccordé à une station centrale de gestion de la distribution de gaz, notamment de télésurveillance.

## Revendications

1. Conteneur, comportant au moins une enveloppe (2) définissant un volume intérieur (4), l'enveloppe (2) comportant une partie principale pour contenir au moins un liquide (160), délimitée périphériquement par une portion de paroi principale (3), et une partie d'extrémité (5) formant un passage (7) d'accès au volume intérieur (4) et de dimensions transversales inférieures à celles de la partie principale, des moyens d'obturation amovibles (8) pour obturer le passage d'accès (7), et des moyens détecteurs de niveau (9, 9′) de type capacitif fournissant un signal représentatif d'un niveau de liquide dans la partie principale de l'enveloppe, caractérisé en ce que la portion de paroi principale (3) est cylindrique et en ce que les moyens détecteurs comprennent au moins une électrode (9 ; 9′) montée au voisinage de la portion de paroi principale (3), l'électrode (9 ; 9′) étant constituée d'une lame allongée s'étendant parallèlement à une génératrice de la portion de paroi principale et présentant, en section transversale, une forme en arc de cercle concentrique à la portion de paroi principale adjacente (3).

2. Conteneur selon la revendication 1, caractérisé en ce que l'enveloppe (2) est réalisée en métal conducteur et constitue une électrode des moyens détecteurs (9,9′).

3. Conteneur selon la revendication 1 ou la revendication 2, caractérisé en ce qu'il comporte deux électrodes parallèles (9, 9′) espacées l'une de l'autre et de la portion de paroi principale et sensiblement concentriques à cette dernière.

4. Conteneur selon l'une des revendications 1 à 3, caractérisé en ce qu'il comporte un boîtier (14) de traitement du signal des moyens détecteurs (9, 9′) monté sur le conteneur.

5. Conteneur selon la revendication 4, caractérisé en ce que le boîtier (14) est relié aux moyens détecteurs (9, 9′) par au moins un fil conducteur (12, 12′) passant par le passage d'accès (7) et s'étendant hors des moyens d'obturation (8).

6. Conteneur selon la revendication 4 ou la revendication 5, caractérisé en ce que le boîtier (14) comporte un indicateur visuel (16) de niveau de liquide (160) dans l'enveloppe (3).

7. Conteneur selon l'une des revendications précédentes, caractérisé en ce qu'il comprend une enveloppe extérieure (1) entourant l'enveloppe (2) définissant le volume intérieur (4).

8. Utilisation d'un conteneur selon la revendication 7, pour le stockage de produits biologiques dans un liquide cryogénique.

## Patentansprüche

1. Behälter, mit mindestens einem ein Innenvolumen (4) umschließenden Mantel (2), der einen an seinem Rande von einem Hauptwandabschnitt (3) begrenzten Hauptteil zur Aufnahme mindestens einer Flüssigkeit (160) und einen Endteil (5) umfaßt, der einen Zugangsdurchtritt (7) zu dem Innenvolumen (4) bildet und Abmessungen in Querrichtung hat, die kleiner als diejenigen des Hauptteils sind, einer abnehmbaren Verschlußeinrichtung (8) zum Verschließen des Zugangsdurchtritts (7), und Füllstanderfassungseinrichtungen (9, 9′) kapazitiver Bauart, die ein für einen Flüssigkeitsstand in dem Hauptteil des Mantels repräsentatives Signal liefern, dadurch gekennzeichnet, daß der Hauptwandabschnitt (3) zylindrisch ist und daß die Erfassungseinrichtungen mindestens eine in der Nähe des Hauptwandabschnitts montierte Elektrode (9, 9′) aufweisen, wobei die Elektrode (9, 9′) aus einer länglichen Lamelle besteht, die sich parallel zu einer Erzeugenden des Hauptwandabschnitts erstreckt und im Querschnitt die Form eines Kreisbogens hat, der zu dem danebenliegenden Hauptwandabschnitt (3) konzentrisch ist.

2. Behälter nach Anspruch 1, dadurch gekennzeichnet, daß der Mantel (2) aus leitendem Metall besteht und eine Elektrode der Erfassungseinrichtungen (9, 9′) bildet.

3. Behälter nach Anspruch 1 oder 2, dadurch gekennzeichnet, daß er zwei voneinander und von dem Hauptwandabschnitt beabstandete und zu letzterem im wesentlichen konzentrische parallele Elektroden (9, 9′) aufweist.

4. Behälter nach einem der Ansprüche 1 bis 3, dadurch gekennzeichnet, daß er ein an dem Behälter montiertes Gehäuse (14) zur Verarbeitung des Signals der Erfassungseinrichtungen (9, 9′) aufweist.

5. Behälter nach Anspruch 4, dadurch gekennzeichnet, daß das Gehäuse (14) mit den Erfassungseinrichtungen (9, 9′) über mindestens einen Leitungsdraht (12, 12′) verbunden ist, der durch den Zugangsdurchtritt (7) verläuft und sich außerhalb der Verschlußeinrichtung (8) erstreckt.

6. Behälter nach Anspruch 4 oder 5, dadurch gekennzeichnet, daß das Gehäuse (14) eine visuelle Anzeigevorrichtung (16) für den Füllstand der Flüssigkeit (160) in dem Mantel aufweist.

7. Behälter nach einem der vorhergehenden Ansprüche, dadurch gekennzeichnet, daß er einen den Mantel (2), welcher das Innenvolumen (4) festlegt, umgebenden Außenmantel (1) aufweist.

8. Verwendung eines Behälters nach Anspruch 7 zur Lagerung biologischer Produkte in einer kryogenen Flüssigkeit.

## Claims

1. Container, including at least one casing (2) defining an internal volume (4), the casing (2) including a main part for containing at least one liquid (160), bounded peripherally by a main wall portion (3), and an end part (5) forming a passage (7) for access to the internal volume (4) and of transverse dimensions less than those of the main part, removable stopper means (8) for stopping the access passage (7), and capacitive-type level detector means (9, 9′) supplying a signal representative of a level liquid in the main part of the casing, characterized in that the main wall portion (3) is cylindrical and in that the detector means comprise at least one electrode (9; 9′) mounted in the vicinity of the main wall portion (3), the electrode (9; 9′) consisting of an elongate blade extending parallel to a generatrix of the main wall portion and exhibiting a circular arc shape, in cross-section, concentric with the adjacent main wall portion (3).

2. Container according to Claim 1, characterized in that the casing (2) is produced from conducting metal and constitutes one electrode of the detector means (9, 9′).

3. Container according to Claim 1 or Claim 2, characterized in that it includes two parallel electrodes (9, 9′) spaced from one another and from the main wall portion and substantially concentric with the latter.

4. Container according to one of Claims 1 to 3, characterized in that it includes a box (14) for processing the signal from the detector means (9, 9′) which is mounted on the container.

5. Container according to Claim 4, characterized in that the box (14) is linked to the detector means (9, 9′) by at least one conducting wire (12, 12′) passing through the access passage (7) and extending out of the stopper means (8).

6. Container according to Claim 4 or Claim 5, characterized in that the box (14) includes a visual indicator (16) of liquid level (160) in the casing (3).

7. Container according to one of the preceding claims, characterized in that it comprises an outer casing (1) surrounding the casing (2) defining the internal volume (4).

8. Use of a container according to Claim 7, for the storage of biological products in a cryogenic liquid.
